# EUROPÄISCHE PATENTSCHRIFT

(11) **EP 1 420 974 B1**
(45) Veröffentlichungstag und Bekanntmachung des Hinweises auf die Patenterteilung: **19.01.2005**
(21) Anmeldenummer: 02760157.4
(22) Anmeldetag: 30.08.2002
(51) Int. Cl.: B60K 26/02, G05G 1/14

(54) **VERSCHLEISSFREIER FAHRPEDAL-KICK-DOWN-SCHALTER**
WEAR-RESISTANT ACCELERATOR PEDAL KICK DOWN SWITCH
LEVIER DE RETROGRADAGE FORCE RESISTANT A L'USURE

(30) Priorität: 31.08.2001 DE 10142451; 17.04.2002 DE 10217050
(43) Veröffentlichungstag der Anmeldung: 26.05.2004
(73) Patentinhaber: SIEMENS AKTIENGESELLSCHAFT, 80333 München (DE)
(72) Erfinder: REIMANN, Christian, 61273 Wehrheim (DE); WEIS, Christian, 55120 Mainz (DE); VON WILLICH, Joachim, 65618 Selters (DE)
(86) Internationale Anmeldenummer: PCT/DE2002/003240
(87) Internationale Veröffentlichungsnummer: WO 2003/022616

(56) Entgegenhaltungen:
- DE-A- 19 503 335
- FR-A- 2 730 052
- US-A- 5 506 502
- US-B1- 6 276 229

## Beschreibung

Die Erfindung bezieht sich auf ein Fahrpedal für ein Kraftfahrzeug insbesondere mit einem Automatikgetriebe, mit einem Pedalarm, der in seinem einen Endbereich um eine Schwenkachse schwenkbar gelagert ist und in seinem anderen Endbereich eine vom Fahrer des Kraftfahrzeugs kraftbeaufschlagbare Pedalplatte aufweist, wobei durch die Kraftbeaufschlagung der Pedalplatte der Pedalarm entgegen einer Federkraft aus einer Ruhestellung bis in eine Vollgasstellung schwenkbar und bei Überwinden einer zusätzlichen Kraftschwelle eines Kick-down-Schalters unter Betätigung des Kick-down-Schalters in eine absolute Endstellung weiterschwenkbar ist, in der von dem Kick-down-Schalter ein Signal erzeugbar und einer Steuerelektronik zuleitbar ist.

Bei einem derartigen Fahrpedal ist es bekannt, dass der Pedalarm bei Erreichen der Vollgasstellung zur Anlage an einen Stößel des Kick-down-Schalters gelangt und bei der Weiterbewegung in die absolute Endstellung den Stößel entsprechend axial verschiebt. An der radial umlaufenden Mantelfläche des Stößels sind mehrere Rastmulden ausgebildet, in die mit einem Teil ihres Umfangs radial geführte Rastkugeln hineinragen, die durch Federn in die Rastmulden beaufschlagt sind und die durch die Weiterbewegung des Pedalarms und dabei Überwindung der Kraftschwelle, mit der die Rastkugeln in die Rastmulden beaufschlagt sind, aus den Rastmulden herausbewegt werden. In der absoluten Endstellung erfolgt dann durch Überbrückung zweier elektrischer Kontakte die Auslösung eines Signals.

Diese Ausbildung ist nicht nur bauteilaufwendig sondern führt mit der Zeit zu einem Verschleiß an den Rastkugeln und Rastmulden, wodurch wiederum sich die zu überwindende Kraftschwelle bei der Betätigung des Kick-down-Schalters ändert.

US 6 276 229 offenbart ein Fahrpedal für ein Fahrzeug nach dem Oberbegriff des Anspruches 1.

Aufgabe der Erfindung ist es daher ein Fahrpedal der eingangs genannten Art zu schaffen, dass einen einfach aufgebauten, verschleißfreien Kick-down-Schalter mit weitgehend konstanter Kraftschwelle aufweist.

Diese Aufgabe wird erfindungsgemäß dadurch gelöst, dass der Kick-down-Schalter einen Magneten aufweist, durch dessen Magnetkraft ein magnetisch leitendes Bauteil in Anlage an einem Rückschlusselement haltbar und durch die Bewegung des Pedalarms in die absolute Endstellung vom Rückschlusselement wegbewegbar beaufschlagbar ist.

Durch den Magneten wird das magnetisch leitenden Bauteil mit einer bestimmten Kraft, welche die Kraftschwelle bildet, bei unbetätigtem Kick-down-Schalter an dem Rückschlusselement gehalten. Um diese Kraftschwelle zu überwinden, muss mit entsprechend erhöhter Kraft der Pedalarm vom Fahrer des Kraftfahrzeugs beaufschlagt werden, so dass sich das magnetische leitende Bauteil vom Rückschlusselement löst und der Pedalarm in seine absolute Endstellung weiter schwenkbar ist. Da nach Lösen des magnetisch leitenden Bauteils von dem Rückschlusselement die Haltekraft sofort stark absinkt und bei der weiteren Wegbewegung des magnetisch leitenden Bauteils vom Rückschlusselement rasch sich noch weiter verringert, ist im wesentlichen nur eine Kraftschwelle aber bei der Weiterbewegung in die absolute Endstellung keine weitere Gegenkraft zu überwinden.

Da die Erzeugung der Kraftschwelle nicht mechanisch sondern durch die Magnetkraft des Magneten erfolgt, entsteht auch kein Verschleiß an den die Kraftschwelle erzeugenden Bauteilen und keine Reduzierung der Kraftschwelle über der Lebensdauer des Fahrpedals.

Durch das Signal des Kick-down-Schalters kann bei einem Kraftfahrzeug mit Automatikgetriebe von der Steuerelektronik z.B. ein Zurückschalten in einen niedrigeren Gang ausgelöst werden, um stark beschleunigen zu können.

Es sind aber auch andere Funktionen denkbar, die durch das Signal des Kick-down-Schalters ausgelöst werden können.

Besitzt z.B. das Kraftfahrzeug einen Geschwindigkeitsbegrenzer, so kann durch das Signal des Kick-down-Schalters von der Steuerelektronik eine vorher gesetzte Begrenzungsgeschwindigkeit wieder gelöscht werden. Diese Anwendung ist unabhängig davon, ob das Kraftfahrzeug ein Automatikgetriebe oder ein Schaltgetriebe besitzt.

Um nach einem Rückführen des Pedalsarms in eine Position unterhalb der Vollgasstellung auch eine Rückführung des magnetisch leitenden Bauteils zur Anlage an dem Rückschlusselement sicher zu stellen, kann das magnetisch leitende Bauteil durch eine Federkraft gegen das Rückschlusselement belastet sein. Dazu ist aber nur eine geringe Federkraft erforderlich. Dabei kann das magnetisch leitende Bauteil durch eine fest abgestützte, vorgespannte Druckfeder gegen das Rückschlusselement belastet sein, die vorzugsweise eine Wendelfeder ist oder aber auch ein Elastomerblock sein kann.

Zur Übertragung der Bewegung des Pedalarms auf das magnetisch leitende Bauteil kann ein Stößel eine durch die Bewegung des Pedalarms axial verschiebbar beaufschlagbare Stirnfläche aufweisen und das der Stirnfläche entgegengesetzte Ende des Stößels das magnetisch leitende Bauteil vom Rückschlusselement wegbewegbar beaufschlagen.

Ist dabei der Stößel magnetisch leitend ausgebildet, so dient er gleichzeitig zu einer Konzentration der Magnetfeldlinien und Leitung des Magnetflusses zum magnetisch leitenden Bauteil. Damit kann die Baugröße des Magneten gering gehalten werden.

Zur Bauraumverringerung und weiteren Konzentration des Magnetflusses dient es, wenn der Magnet ein Ringmagnet ist, durch dessen zentrische Öffnung der Stößel hindurchgeführt ist und von dessen der Stirnfläche abgewandtem Ende das als Kreisplatte ausgebildete magnetisch leitende Bauteil beaufschlagbar ist.

Sind Stößel und magnetisch leitendes Bauteil einteilig ausgebildet, so wird der Magnetfluss noch weiter verbessert.

Das magnetisch leitende Bauteil kann aber auch an dem Stößel befestigt sein.

Um das magnetisch leitende Bauteil nach seinem Abheben von dem Rückschlusselement in einer bestimmten Ausrichtung zum Rückschlusselement zu halten kann das magnetisch leitende Bauteil einen Führungszapfen aufweisen, der in einer Führungsbohrung axial verschiebbar geführt ist.

Damit die Haltekraft gleichmäßig am Umfang des Ringmagneten verteilt wirkt, kann das Rückschlusselement ringförmig ausgebildet sein und den Ringmagnet umschließen.

Zur weiteren Konzentration des Magnetflusses weist dabei das ringförmige Rückschlusselement einen Ringscheibenteil auf, der sich an dem der Stirnfläche nahen Bereich des Stößels radial bis zum Stößel erstreckt und durch dessen zentrische Ringbohrung der Stößel geführt ist.

Das magnetisch leitende Bauteil ist vorzugsweise bei nichtbetätigtem Kick-down-Schalter an dem dem Pedalarm abgewandten Ende des Rückschlusselements in Anlage.

Sind dabei das magnetisch leitende Bauteil und das Rückschlusselement jeweils mit einem Kontakt eines elektrischen Schalters elektrisch leitend verbunden, so bilden magnetisch leitendes Bauteil und Rückschlusselement in Doppelfunktion gleichzeitig miteinander verbindbare Kontaktelemente des Kick-down-Schalters, die beim voneinander Trennen ein Signal erzeugen, das der Steuerelektronik zuleitbar ist.

Eine andere Möglichkeit zur Ausbildung des Schalters besteht darin, dass zwischen dem Rückschlusselement und einem radialen Kragenteil des Stößels ein Hallelement angeordnet ist und bei Annäherung oder Entfernung des Kragenteils zu oder von dem Rückschlusselement das das Hallelement beeinflussende Magnetfeld ein Signal im Hallelement auslösend ändert. Dabei erfolgt die Auslösung des Signals berührungslos und somit verschleißfrei.

Der Kick-down-Schalter kann entweder am Pedalarm angeordnet und das magnetisch leitende Bauteil von dem Pedalarm in der Vollgasstellung gegen einen ortsfesten Anschlag beaufschlagbar oder ortsfest angeordnet und in der Vollgasstellung das magnetisch leitende Bauteil von dem Pedalarm beaufschlagbar sein.

Der Magnet kann ein Dauermagnet sein, so dass die erzeugte zu überwindende Kraftschwelle immer gleich bleibt. Seine Anordnung ist einfach, da keine Spannungsversorgung zu seinem Betrieb nötig ist.

Der Magnet kann aber auch ein Elektromagnet sein.

Ist dabei der Elektromagnet mit einem Spulenstrom variierbarer Größe beaufschlagbar, so kann damit auch das Kraftniveau der zu überwindenden Kraftschwelle entsprechend variiert werden.

Dabei kann der Spulenstrom abhängig von dem Steuerzustand des Automatikgetriebes wie z.B. dem jeweils eingelegten Gang variierbar einstellbar sein.

Eine andere Möglichkeit besteht darin, dass der Spulenstrom abhängig von dem Fahrzustand wie z.B. von der jeweiligen Fahrgeschwindigkeit des Kraftfahrzeugs variierbar einstellbar sein.

Durch die jeweilige Höhe der zu überwindenden Kraftschwelle erhält der Fahrer des Kraftfahrzeugs eine haptische Rückmeldung über den momentanen Steuerzustand des Automatikgetriebes oder über die momentane Fahrgeschwindigkeit.

Ausführungsbeispiele der Erfindung sind in der Zeichnung dargestellt und werden im folgenden näher beschrieben. Es zeigen
- Figur 1: eine Seitenansicht eines Fahrpedals
- Figur 2: ein erstes Ausführungsbeispiel eines unbetätigten Kick-down-Schalters des Fahrpedals nach Figur 1 im Querschnitt
- Figur 3: den betätigen Kick-down-Schalter nach Figur 2 im Querschnitt
- Figur 4: ein zweites Ausführungsbeispiel eines ungetätigten Kick-down-Schalters des Fahrpedals nach Figur 1 im Querschnitt.

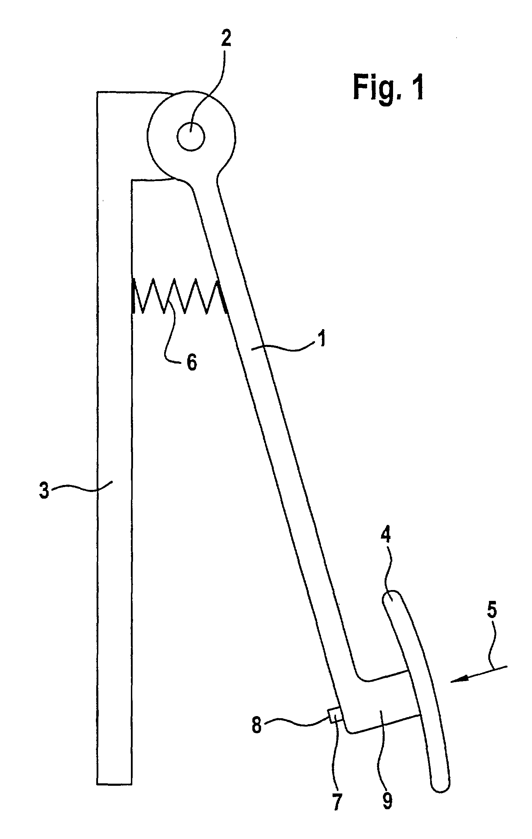

Das in Figur 1 dargestellte Fahrpedal für ein Kraftfahrzeug besitzt einen Pedalarm 1, der mit seinem einen Ende an einer ortsfesten Grundplatte 3 um eine Schwenkachse 2 schwenkbar gelagert ist. An seinem anderen Ende besitzt der Pedalarm 1 eine Pedalplatte 4, die von einem Fahrer in Richtung des Pfeils 5 entgegen der Kraft einer Rückstellfeder 6 kraftbeaufschlagbar ist. Bei Nichtbeaufschlagung der Pedalplatte 4 durch den Fahrer wird der Pedalarm 1 von der Rückstellfeder 6 in die dargestellte Ruhestellung bewegt.

Beaufschlagt der Fahrer die Pedalplatte 4, so wird je nach Kraftbeaufschlagung der Pedalarm 1 bis in seine Vollgasstellung verschwenkt, in der er mit einem auf der der Pedalplatte 4 abgewandten Seite des Pedalarms 1 hervorstehenden, axial verschiebbaren Stößel 7 eines Kick-down-Schalters in Anlage an der Grundplatte 3 gelangt. Bei Weiterbewegung des Pedalarms 1 bis zu seiner absoluten Endstellung, in der er selbst zur Anlage an der Grundplatte 3 gelangt, wird unter Überwindung einer zusätzlichen Kraftschwelle der Stößel 7 axial in seine Aufnahme im Pedalarm 1 verschoben und der Kick-down-Schalter betätigt.

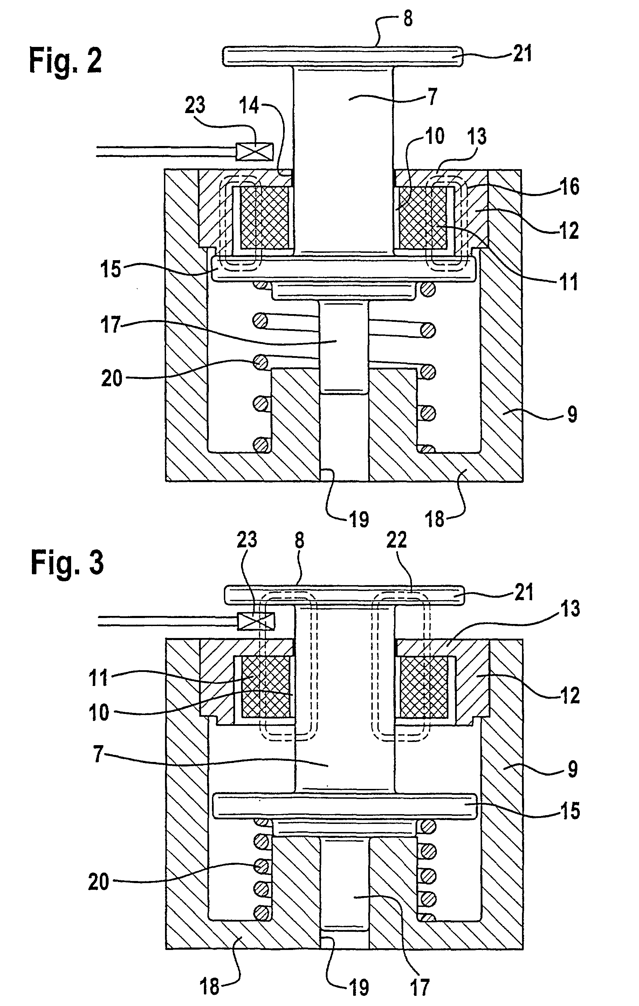

In den Figuren 2 bis 4 sind zwei Ausführungsbeispiele des in der Aufnahme des Pedalarms 1 angeordneten Kick-down-Schalters dargestellt.

Sie zeigen den axial verschiebbaren Stößel 7, der mit dem Ende seiner zur Anlage an der Grundplatte 3 bringbaren Stirnfläche 8 aus einem topfartigen Gehäuse 9 aus magnetisch nicht leitendem Material des Kick-down-Schalters ragt.

Mit seinem anderen Endbereich ist der magnetisch leitend ausgebildete Stößel 7 durch eine zentrische Öffnung 10 eines als Ringmagnet 11 ausgebildeten, axial magnetisierten Dauermagneten hindurch geführt, der von einem ringförmigen Rückschlusselement 12 umschlossen ist, das einen Ringscheibenteil 13 aufweist, der sich außenseitig radial bis zum Stößel 7 erstreckt und durch dessen zentrische Ringbohrung 14 das aus dem Gehäuse 9 ragende Ende des Stößels 7 geführt ist.

Bei dem dargestellten Ausführungsbeispiel ist der Ringmagnet ein Dauermagnet. Anstatt des Dauermagneten könnte aber auch ein Elektromagnet verwendet werden, dessen Haltekraft von dem die Magnetspule des Elektromagneten beaufschlagenden Spulenstrom abhängt.

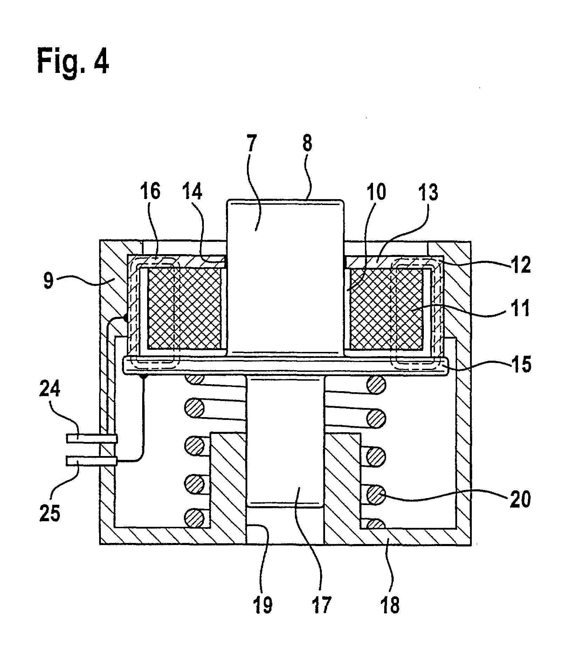

An dem in das Gehäuseinnere ragenden ringförmigen Ende des Rückschlusselements 12 ist in der in den Figuren 2 und 4 dargestellten Ruhestellung ein als Kreisplatte 15 ausgebildetes magnetisch leitendes Bauteil durch die Kraft des Ringmagneten 11 in Anlage gehalten.

In dieser Ruhestellung wird der axiale Magnetfluss des Ringmagneten 11 über die magnetisch leitende Kreisplatte 15 und das Rückschlusselement 12 geschlossen, wie durch die Magnetfeldlinien 16 in den Figuren 2 und 4 dargestellt ist.

An der dem Stößel 7 entgegengesetzten Seite zu diesem koaxial weist die Kreisplatte 15 einen Führungszapfen 17 auf, der in eine am Boden 18 des Gehäuses 9 ausgebildete Führungsbohrung 19 ragt und darin axial verschiebbar geführt ist.

Durch eine am Boden 18 des Gehäuses 9 abgestützte Wendelfeder 20 geringer Kraft ist die Kreisplatte 15 gegen das Rückschlusselement 12 belastet.

Wird, wie in Figur 3 dargestellt, die Stirnfläche 8 des Stößels 7 durch Anlage an der Grundplatte 3 kraftbeaufschlagt und erfolgt eine deutliche Erhöhung der Kraftbeaufschlagung durch den Fahrer, so wird die Haltekraft, mit der der Ringmagnet die Kreisplatte 15 an dem Rückschlusselement hält und die eine Kraftschwelle bildet, überwunden und der Stößel 7 in das Innere des Gehäuses 9 verschoben.

Dabei wird der Magnetfluss durch die Kreisplatte 15 zum Rückschlusselement 12 unterbrochen. Nun erfolgt der Magnetfluss über den magnetisch leitenden Stößel 7. Während dieser Magnetfluss bei dem Ausführungsbeispiel in Figur 4 über den Stößel 7 und das Ringscheibenteil 13 des Rückschlusselements 12 erfolgt, wird bei dem Ausführungsbeispiel der Figuren 2 und 3 der Magnetfluss im Stößel 7 bis zu dessen nach außen ragendem Ende und über ein radiales Kragenteil 21 des Stößels an diesem Ende zu dem nach außen gerichteten Pol des Ringmagneten 11 geführt, wie die in Figur 3 dargestellten Magnetfeldlinien 22 zeigen.

Bei der Verwendung eines Elektromagneten könnte der dessen Magnetspule beaufschlagende Spulenstrom von einer Steuereinheit auf eine unterschiedliche Größe gesteuert werden, die davon abhängig ist, welcher Gang des Automatikgetriebes gerade eingelegt ist oder welche Fahrgeschwindigkeit das Kraftfahrzeug gerade fährt. Entsprechende Signale erhält die Steuereinheit von einem Getriebesensor oder einem Fahrgeschwindigkeitssensor zugeleitet.

Axial zwischen dem Kragenteil 21 und dem ihm zugewandten Pol des Ringmagneten 11 ist ein Hallelement 23 angeordnet, das in der Ruhestellung des Kick-down-Schalters (Figur 2) weitgehend unbeeinflusst durch das Magnetfeld des Ringmagneten 11 ist. In der in Figur 3 dargestellten Betätigungsstellung des Kick-down-Schalters queren die Magnetfeldlinien 22 des Magnetflusses aber das Hallelement 23 und lösen in diesem ein Kickdown-Signal aus, das einer nicht dargestellte Steuerelektronik des Kraftfahrzeugs zugeführt wird.

Bei dem Ausführungsbeispiel der Figur 4 ist ein erster elektrischer Kontakt 24 mit dem Rückschlusselement 12 und ein zweiter elektrischer Kontakt 25 mit der Kreisplatte 15 elektrisch leitend verbunden. In der dargestellten Ruhestellung sind die Kontakte 24 und 25 über das Rückschlusselement 12 und die Kreisplatte 15 elektrisch leitend miteinander verbunden. Bei Verschiebung des Stößels 7 und der Kreisplatte 15 wird dieser Stromkreis unterbrochen und damit ein Kick-down-Signal ausgelöst, das einer nicht dargestellten Steuerelektronik des Kraftfahrzeugs zugeführt wird.

## Patentansprüche

1. Fahrpedal für ein Kraftfahrzeug insbesondere mit einem Automatikgetriebe, mit einem Pedalarm (1), der in seinem einen Endbereich um eine Schwenkachse (2) schwenkbar gelagert ist und in seinem anderen Endbereich eine vom Fahrer des Kraftfahrzeugs kraftbeaufschlagbare Pedalplatte (4) aufweist, wobei durch die Kraftbeaufschlagung der Pedalplatte der Pedalarm entgegen einer Federkraft aus einer Ruhestellung bis in eine Vollgasstellung schwenkbar und bei Überwinden einer zusätzlichen Kraftschwelle eines Kick-down-Schalters unter Betätigung des Kick-down-Schalters in eine absolute Endstellung weiterschwenkbar ist, in der von dem Kick-down-Schalter ein Signal erzeugbar und einer Steuerelektronik zuleitbar ist, **dadurch gekennzeichnet, dass** der Kick-down-Schalter einen Magneten (11) aufweist, durch dessen Magnetkraft ein magnetisch leitendes Bauteil (15) in Anlage an einem Rückschlusselement (12) haltbar und durch die Bewegung des Pedalarms (1) in die absolute Endstellung vom Rückschlusselement (12) wegbewegbar beaufschlagbar ist.

2. Fahrpedal nach Anspruch 1, **dadurch gekennzeichnet , dass** das magnetisch leitende Bauteil (15) durch eine Federkraft gegen das Rückschlusselement (12) belastet ist.

3. Fahrpedal nach Anspruch 2, **dadurch gekennzeichnet , dass** das magnetisch leitende Bauteil (15) durch eine fest abgestützte, vorgespannte Druckfeder (20) gegen das Rückschlusselement (12) belastet ist.

4. Fahrpedal nach Anspruch 3, **dadurch gekennzeichnet , dass** die Druckfeder eine Wendelfeder (20) ist.

5. Fahrpedal nach Anspruch 3, **dadurch gekennzeichnet, dass** die Druckfeder ein Elastomerblock ist.

6. Fahrpedal nach einem der vorhergehenden Ansprüche, **dadurch gekennzeichnet, dass** ein Stößel ((7) eine durch die Bewegung des Pedalarms (1) axial verschiebbar beaufschlagbare Stirnfläche (8) aufweist und das der Stirnfläche (8) entgegengesetzte Ende des Stößels (7) das magnetisch leitende Bauteil vom Rückschlusselement 812) wegbewegbar beaufschlagt.

7. Fahrpedal nach Anspruch 6, **dadurch gekennzeichnet, dass** der Stößel (7) magnetisch leitend ausgebildet ist.

8. Fahrpedal nach einem der Ansprüche 6 und 7, **dadurch gekennzeichnet, dass** der Magnet ein Ringmagnet (11) ist, durch dessen zentrische Öffnung (10) der Stößel (7) hindurchgeführt ist und von dessen der Stirnfläche (8) abgewandten Ende das als Kreisplatte (15) ausgebildete magnetisch leitende Bauteil beaufschlagbar ist.

9. Fahrpedal nach einem der Ansprüche 6 bis 8, **dadurch gekennzeichnet, dass** Stößel (7) und magnetisch leitendes Bauteil einteilig ausgebildet sind.

10. Fahrpedal nach einem der Ansprüche 6 bis 8, **dadurch gekennzeichnet, dass** das magnetisch leitende Bauteil an dem Stößel befestigt ist.

11. Fahrpedal nach einem der vorhergehenden Ansprüche, **dadurch gekennzeichnet, dass** das magnetisch leitende Bauteil einen Führungszapfen (17) aufweist, der in einer Führungsbohrung (19) axial verschiebbar geführt ist.

12. Fahrpedal nach einem der Ansprüche 8 bis 11, **dadurch gekennzeichnet, dass** das Rückschlusselement (12) ringförmig ausgebildet ist und den Ringmagnet (11) umschließt.

13. Fahrpedal nach Anspruch 12, **dadurch gekennzeichnet, dass** das ringförmige Rückschlusselement (12) einen Ringscheibenteil (13) aufweist, der sich an dem der Stirnfläche (8) nahen Bereich des Stößels (7) radial bis zum Stößel (7) erstreckt und durch dessen zentrische Ringbohrung (14) der Stößel (7) geführt ist.

14. Fahrpedal nach einem der vorhergehenden Ansprüche, **dadurch gekennzeichnet, dass** das magnetisch leitende Bauteil bei nichtbetätigtem Kick-down-Schalter an dem dem Pedalarm (1) abgewandte Ende des Rückschlusselements (12) in Anlage ist.

15. Fahrpedal nach Anspruch 14, **dadurch gekennzeichnet, dass** das magnetisch leitende Bauteil und das Rückschlusselement (12) jeweils mit einem Kontakt (24, 25) eines elektrischen Schalters elektrisch leitend verbunden sind.

16. Fahrpedal nach einem der vorhergehenden Ansprüche, **dadurch gekennzeichnet, dass** zwischen dem Rückschlusselement (12) und einem radialen Kragenteil (21) des Stößels (7) ein Hallelement (23) angeordnet ist und bei Annäherung oder Entfernung des Kragenteils (21) zu oder von dem Rückschlusselement (12) das das Hallelement (23) beeinflussende Magnetfeld ein Signal im Hallelement (23) auslösend ändert.

17. Fahrpedal nach einem der vorhergehenden Ansprüche, **dadurch gekennzeichnet, dass** der Kick-down-Schalter am Pedalarm (1) angeordnet und das magnetisch leitende Bauteil von dem Pedalarm (1) in der Vollgasstellung gegen einen ortsfesten Anschlag beaufschlagbar ist.

18. Fahrpedal nach einem der Ansprüche 1 bis 16, **dadurch gekennzeichnet, dass** der Kick-down-Schalter ortsfest angeordnet und in der Vollgasstellung das magnetisch leitende Bauteil von dem Pedalarm beaufschlagbar ist.

19. Fahrpedal nach einem der vorhergehenden Ansprüche, **da-durch gekennzeichnet, dass** der Magnet ein Dauermagnet ist.

20. Fahrpedal nach einem der Ansprüche 1 bis 18, **dadurch gekennzeichnet, dass** der Magnet ein Elektromagnet ist.

21. Fahrpedal nach Anspruch 20, **dadurch gekennzeichnet, dass** der Elektromagnet mit einem Spulenstrom variierbarer Größe beaufschlagbar ist.

22. Fahrpedal nach Anspruch 21, **dadurch gekennzeichnet, dass** der Spulenstrom abhängig von dem Steuerzustand des Automatikgetriebes variierbar einstellbar ist.

23. Fahrpedal nach Anspruch 21, **dadurch gekennzeichnet, dass** der Spulenstrom abhängig von dem Fahrzustand des Kraftfahrzeugs variierbar einstellbar ist.

24. Fahrpedal nach Anspruch 23, **dadurch gekennzeichnet, dass** der Spulenstrom abhängig von der Fahrgeschwindigkeit des Kraftfahrzeugs einstellbar ist.

## Claims

1. Accelerator pedal for a motor vehicle, in particular having an automatic transmission, having a pedal arm (1) which is mounted so as to be pivotable about a pivot axis (2) in its one end region and has, in its other end region, a pedal plate (4) to which force can be applied by the driver of the motor vehicle, the pedal arm being capable of pivoting out of a position of rest counter to a spring force into a full throttle position through the application of force of the pedal plate, and when an additional force threshold of a kick-down switch is overcome by activating the kick-down switch it can be pivoted on into an absolute end position in which a signal can be generated by the kick-down switch and can be fed to control electronics, **characterized in that** the kick-down switch has a magnet (11) through whose magnetic force a magnetically permeable component (15) can be held in abutment against a return element (12) and can be loaded so as to be moved away from the return element (12) by the movement of the pedal arm (1) into the absolute end position.

2. Accelerator pedal according to Claim 1, **characterized in that** the magnetically permeable component (15) is loaded against the return element (12) via a spring force.

3. Accelerator pedal according to Claim 2, **characterized in that** the magnetically permeable component (15) is loaded against the return element (12) by a permanently supported, prestressed compression spring (20).

4. Accelerator pedal according to Claim 3, **characterized in that** the compression spring is a helical spring (20).

5. Accelerator pedal according to Claim 3, **characterized in that** the compression spring is an elastomer block.

6. Accelerator pedal according to one of the preceding claims, **characterized in that** a tappet (7) has an end face (8) which can be loaded so as to be axially displaceable by the movement of the pedal arm (1), and the end of the tappet (7) which is opposite the end face (8) loads the magnetically permeable component so as to move it away from the return element (12).

7. Accelerator pedal according to Claim 6, **characterized in that** the tappet (7) is embodied so as to be magnetically permeable.

8. Accelerator pedal according to one of Claims 6 and 7, **characterized in that** the magnet is a ring magnet (11) through whose central opening (10) the tappet (7) is guided and from whose end facing away from the end face (8) the magnetically permeable component which is embodied as a circular plate (15) can be loaded.

9. Accelerator pedal according to one of Claims 6 to 8, **characterized in that** the tappet (7) and magnetically permeable component are embodied in one piece.

10. Accelerator pedal according to one of Claims 6 to 8, **characterized in that** the magnetically permeable component is attached to the tappet.

11. Accelerator pedal according to one of the preceding claims, **characterized in that** the magnetically permeable component has a guide pin (17) which is guided in an axially displaceable fashion in a guide bore (19).

12. Accelerator pedal according to one of Claims 8 to 11, **characterized in that** the return element (12) is embodied so as to be annular and surrounds the ring magnet (11).

13. Accelerator pedal according to Claim 12, **characterized in that** the annular return element (12) has a ring slider part (13) which, at the region of the tappet (7) which is near to the end face (8), extends radially as far as the tappet (7), and the tappet (7) is guided through its central ring bore (14).

14. Accelerator pedal according to one of the preceding claims, **characterized in that**, when the kick-down switch is not activated, the magnetically permeable component abuts against the end of the return element (12) which is remote from the pedal arm (1).

15. Accelerator pedal according to Claim 14, **characterized in that** the magnetically permeable component and the return element (12) are each electrically conductively connected to a contact (24, 25) of an electrical switch.

16. Accelerator pedal according to one of the preceding claims, **characterized in that** a Hall element (23) is arranged between the return element (12) and a radial collar part (21) of the tappet (7), and when the collar part (21) is moved toward or away from the return element (12), the magnetic field which influences the Hall element (23) changes a signal in the Hall element (23) with a triggering effect.

17. Accelerator pedal according to one of the preceding claims, **characterized in that** the kick-down switch is arranged on the pedal arm (1), and the magnetically permeable component can be loaded by the pedal arm (1) in the full throttle position against a fixed stop.

18. Accelerator pedal according to one of Claims 1 to 16, **characterized in that** the kick-down switch is fixedly arranged and in the full throttle position the magnetically permeable component can be loaded by the pedal arm.

19. The accelerator pedal as claimed in one of the preceding claims, **characterized in that** the magnet is a permanent magnet.

20. Accelerator pedal according to one of Claims 1 to 18, **characterized in that** the magnet is an electromagnet.

21. Accelerator pedal according to Claim 20, **characterized in that** the electromagnet can be loaded with a coil current of variable size.

22. Accelerator pedal according to Claim 21, **characterized in that** the coil current can be adjusted in a variable fashion as a function of the control state of the automatic transmission.

23. Accelerator pedal according to Claim 21, **characterized in that** the coil current can be adjusted in a variable fashion as a function of the driving state of the motor vehicle.

24. Accelerator pedal according to Claim 23, **characterized in that** the coil current can be adjusted as a function of the travel speed of the motor vehicle.

## Revendications

1. Pédale d'accélération destinée à un véhicule automobile équipé, notamment, d'une boîte de vitesses automatique, la pédale d'accélération comportant un levier de pédale (1), reposant, à l'une de ses extrémités, d'une façon pivotante sur un axe de pivotement (2) et comportant, à son autre extrémité, un plateau de pédale (4) pouvant être soumis à une force par le conducteur du véhicule automobile, le levier de pédale pouvant, lorsque le plateau de pédale est soumis à une force, pivoter, en s'opposant à la force d'un ressort, entre une position de repos et une position pleins gaz et, lorsqu'un seuil de force supplémentaire d'un commutateur de rétrogradation forcée est dépassé, continuer à pivoter et, dans une position finale absolue, dans laquelle un signal peut être produit par le commutateur de rétrogradation forcée et être envoyé à un système électronique de commande, actionner le commutateur de rétrogradation forcée **caractérisée par le fait que** le commutateur de rétrogradation forcée comporte un aimant (11), et que, grâce à sa force magnétique, une pièce magnétoconductible (15) peut être maintenue appliquée contre une pièce refermant le c ircuit m agnétique (12), et ê tre s oumise, par le déplacement du levier (1) de la pédale dans la position finale absolue, à un mouvement l'écartant de la pièce refermant le circuit magnétique (12).

2. Pédale d'accélération selon la revendication 1 **caractérisée par le fait que** la pièce magnétoconductible (15) est appliquée contre la pièce refermant le circuit magnétique (12) par la force d'un ressort.

3. Pédale d'accélération selon la revendication 2 **caractérisée par le fait que** la pièce magnétoconductible (15) est appliquée contre la pièce refermant le circuit magnétique (12) par la force d'un ressort de pression (20) à appui fixe et soumis à une précontrainte.

4. Pédale d'accélération selon la revendication 3 **caractérisée par le fait que** le ressort de pression est un ressort en spirale (20).

5. Pédale d'accélération selon la revendication 3 **caractérisée par le fait que** le ressort de pression est un bloc en élastomère.

6. Pédale d'accélération selon l'une des revendications précédentes **caractérisée par le fait qu'**un poussoir (7) comporte une surface frontale (8) pouvant être soumise à un mouvement dans le sens axial en raison du mouvement du levier (1) de la pédale et l'extrémité du poussoir (7) opposée à la surface frontale (8) peut soumettre la pièce magnétoconductible à un mouvement l'écartant de la pièce refermant le circuit magnétique (12).

7. Pédale d'accélération selon la revendication 6 **caractérisée par le fait que** le poussoir (7) est magnétoconductible.

8. Pédale d'accélération selon l'une des revendications 6 et 7 **caractérisée par le fait que** l'aimant est un aimant en anneau (11), à travers l'ouverture centrale (10) duquel est introduit le poussoir (7), et que l'extrémité du poussoir opposée à la surface frontale (8) appuie sur la pièce magnétoconductible conçue sous la forme d'un plateau circulaire (15).

9. Pédale d'accélération selon l'une des revendications 6 à 8 **caractérisée par le fait que** le poussoir (7) et la pièce magnétoconductible sont conçues en une seule pièce.

10. Pédale d'accélération selon l'une des revendications 6 à 8 **caractérisée par le fait que** la pièce magnétoconductible est fixée sur le poussoir.

11. Pédale d'accélération selon l'une des revendications précédentes **caractérisée par le fait que** la pièce magnétoconductible comporte un tourillon de guidage (17), qui peut se déplacer dans le sens axial dans un alésage de guidage (19).

12. Pédale d'accélération selon l'une des revendications 8 à 11 **caractérisée par le fait que** la pièce refermant le circuit magnétique (12) a une forme annulaire et entoure l'aimant en anneau (11).

13. Pédale d'accélération selon la revendication 12 **caractérisée par le fait que** la pièce en forme d'anneau refermant le circuit magnétique (12) a une partie (13) en forme de rondelle annulaire, qui se développe radialement jusqu'au poussoir (7) le long de la partie du poussoir (7) proche de la surface frontale (8) et dont l'alésage central (14) est traversé par le poussoir (7).

14. Pédale d'accélération selon l'une des revendications précédentes **caractérisée par le fait que** la pièce magnétoconductible est appliquée, lorsque le commutateur de rétrogradation forcée n'est pas actionné, sur l'extrémité opposée au levier (1) de la pédale de la pièce refermant le circuit magnétique (12).

15. Pédale d'accélération selon la revendication 14 **caractérisée par le fait que** la pièce magnétoconductible et la pièce refermant le circuit magnétique (12) sont chacune reliée électriquement à un contact (24, 25) d'un commutateur électrique.

16. Pédale d'accélération selon l'une des revendications précédentes **caractérisée par le fait qu'**un élément à effet de Hall (23) est disposé entre la pièce refermant le circuit magnétique (12) et une partie radiale en collerette (21) du poussoir (7) et que, lorsque la partie radiale en collerette (21) se rapproche ou s'éloigne de la pièce refermant le circuit magnétique (12), le champ magnétique, qui influence l'élément à effet de Hall (23), se modifie et déclenche un signal dans l'élément à effet de Hall (23).

17. Pédale d'accélération selon l'une des revendications précédentes **caractérisée par le fait que** le commutateur de rétrogradation forcée est disposé sur le levier (1) de la pédale et que la pièce magnétoconductible peut être appuyée par le levier (1) de la pédale, en position pleins gaz, contre une butée fixe.

18. Pédale d'accélération selon l'une d es revendications 1 à 16 **caractérisée par le fait que** le commutateur de rétrogradation forcée est monté à un endroit fixe et que, dans la position pleins gaz, la pièce magnétoconductible peut être enfoncée par le levier de la pédale.

19. Pédale d'accélération selon l'une des revendications précédentes **caractérisée par le fait que** l'aimant est un aimant permanent.

20. Pédale d'accélération selon l'une d es revendications 1 à 18 **caractérisée par le fait que** l'aimant est un électro-aimant.

21. Pédale d'accélération selon la revendication 20 **caractérisée par le fait que** l'électro-aimant peut être soumis à un courant de bobine d'intensité variable.

22. Pédale d'accélération selon la revendication 21 **caractérisée par le fait que** le courant de bobine peut être réglé d'une façon variable en fonction de l'état de commande de la boîte de vitesses automatique.

23. Pédale d'accélération selon la revendication 21 **caractérisée par le fait que** le courant de bobine peut être réglé d'une façon variable en fonction de l'état de conduite du véhicule automobile.

24. Pédale d'accélération selon la revendication 23 **caractérisée par le fait que** le courant de bobine peut être réglé d'une façon variable en fonction de la vitesse de marche du véhicule automobile.
